(19)

Europäisches
Patentamt
European
Patent Office
Office européen
des brevets

(11) **EP 1 968 247 A1**

(12) **EUROPEAN PATENT APPLICATION**

(43) Date of publication:
**10.09.2008 Bulletin 2008/37**

(51) Int Cl.:
*H04L 12/40* (2006.01)   *H04L 12/28* (2006.01)
*G06F 15/16* (2006.01)

(21) Application number: **08151816.9**

(22) Date of filing: **22.02.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **08.03.2007 US 715643**

(71) Applicant: **Delphi Technologies, Inc.
Troy, Michigan 48007 (US)**

(72) Inventor: **Narasimhaprasad, Ya
560066, Bangalore (IN)**

(74) Representative: **Robert, Vincent et al
Delphi European Headquarters
64, Avenue de la Plaine de France
Paris Nord II
BP 65059 Tremblay-en-France
95972 Roissy Charles de Gaulle Cedex (FR)**

(54) **Shared communication protocol for a bus system of type Controller Area Network (CAN)**

(57)     A method (30) of communicating messages in a CAN network (10) is provided. The method (30) obtains data to be transmitted that relates to an event, prepares a unique event message identifier (EMI) for first data that relates to the event and prepares a common data message identifier (DMI) for the event. The common data message identifier (DMI) identifies second data related to the event. The method further prepares a first transmit message (m4) comprising the unique event message identifier (EMI) and the first data relating to the event, and prepares a second transmit message (m8) comprising the common data message identifier (DMT) and the second data relating to the event, and transmits the first and second messages (m4, m8) to a CAN bus (12), wherein the first and second transmit messages (m4, m8) may be received by one or more receiving devices (14).

FIG. 1

**Description**

Technical Field

The present invention generally relates to communication of data messages on a communication bus, and more particularly relates to a shared message communication protocol for use on a controller area network (CAN) bus.

Background of the Invention

The controller area network (CAN) communication bus is widely employed on automotive vehicles as well as in industrial control applications. The CAN bus generally includes a serial bus line connected to a plurality of communication devices (e.g., control devices) at nodes. A control device at one node is able to transmit data messages onto the communication bus for receipt and processing by other control devices at other nodes. In doing so, the conventional CAN message typically employs an identifier field and a data field. The CAN messages are generally transmitted based on a priority determined by a CAN arbitration.

The CAN is a multimode, bus architecture network that typically employs carrier sense multiple access with a non-destructive bitwise arbitration (CSMA/NBA) mechanism. The nodes are generally synchronized at the reference signal start of frame (SOF). Nodes usually defer transmission of data until the bus state is idle. The idle state is typically marked by three recessive bits. Once the CAN bus becomes idle, a transmit ready node starts contending for the bus.

Each CAN message typically starts with the identifier field ((IF, also called the arbitration field) followed by the data field. When more than one node transmits its message at the same time, bus access conflicts are handled through arbitration based on the identifier field. The CAN typically makes use of n wired-OR bus to connect all the nodes. While transmitting the identifier, each node monitors the serial bus line. If the transmitted bit is recessive (logical one) and a dominant (logical zero) bit is monitored, the node stops transmitting and starts to receive incoming data. By this the nodes with lower priority lose transmit access on the bus and only the node transmitting messages with the highest priority identifier will have transmit access to the bus. The identifier for each message must be unique to prevent a tie. The identifier field information generally is used by both a logical link control (LLC) and media access control (MAC) sublayer. The identifier field content is interpreted as the priority level of the current frame when it is processed by the MAC sublayer and is used to resolve, in a non-destructive way, any collision of messages on the bus. On the other hand, the frame acceptance filtering function of the LLC sublayer processes the information, in order to recognize the transmitted objects and dispatch them to the application programs.

The assignment of the identifiers to the transmitted objects is typically static and carried out off-line before the applications are started. In many cases, this characteristic generally does not limit in any serious way the scheduling policy adopted for the data exchanges. But, in the general case of nonperiodic traffic, the lack of timing information generally inhibits the static way of assigning the priorities. When the network becomes temporarily overloaded, the basic CAN mechanism prevents the transmission of an unpredictable number of objects with high identifier numbers. In a similar way, when the offered traffic approaches the nominal bandwidth of the system, there is a significant growth in the transmission delays at a number of stations. This generally leads to nodes with higher priority messages hogging the network. In that case, lower priority messages have to either wait for a long time period and may miss timing deadlines.

It is therefore desirable to provide for a communication protocol for communicating data via a CAN communication bus that makes available shared communication of high priority and low priority messages, without unduly preventing transmission of low priority messages. It is further desirable to provide for a communication protocol that provides a compromise in that low priority messages may be transmitted with high priority messages without the need to significantly alter the message structure.

Summary of the Invention

In accordance with one aspect of the present invention, a method of communicating messages in a communication network is provided. The method includes the steps of obtaining data to be transmitted that relates to an event, preparing a unique event message identifier for the event and preparing a common data message identifier for the event. The common data message identifier identifies additional data related to the event. The method further includes the steps of preparing a first transmit message comprising the unique event message identifier and the first data relating to the event, and preparing a second transmit message comprising the common data message identifier and the second data related to the event. The method further includes the steps of transmitting the first and second messages to a communication bus, wherein the first and second transmit messages may be received by one or more receiving devices.

According to another aspect of the present invention, a communication network is provided. The network includes a controller area network (CAN) communication bus comprising a data transmission medium and a plurality of nodes. The network also includes a plurality of control devices coupled to the plurality of nodes on the CAN bus. The control devices each includes a processor and memory buffer for transmitting and receiving data in communication with the CAN bus. A processor of one control device obtains data to be transmitted for an event, prepares a unique event message identifier associated with the first data for the event and prepares a common data message identifier associated with second data for the event. The processor also prepares a first transmit message comprising the unique event message identifier and the first data, and prepares a second transmit message comprising the common data message identifier and the second data. The processor further transmits the first and second messages to the CAN bus, wherein the first and second messages may be received by another of the control devices.

The communication network and method of communicating messages on the network allows for shared use of the bus, particularly when transmitting large amounts of data related to an event having lower message priority. By transmitting some of the data as the second data in the second transmit message, the transmitting device is able to communicate first and second data for the event in a manner that allows the lower priority messages to have access to the bus.

These and other features, advantages and objects of the present invention will be further understood and appreciated by those skilled in the art by reference to the following specification, claims and appended drawings.

Brief Description of the Drawings

The present invention will now be described, by way of example, with reference to the accompanying drawings, in which:

FIG. 1 is a block diagram illustrating a communication network having a CAN bus and a plurality of control devices coupled to bus nodes;
FIG. 2 is a state diagram illustrating a communication protocol for communicating messages in the communication network, according to one embodiment of the present invention;
FIG. 3 is an exemplary message frame flow illustrating real time and non-real time data messages transmitted on the communication bus pursuant to the communication protocol of FIG. 2;
FIG. 4 is an exemplary message containing the unique event message identifier and associated first data field according to one embodiment; and
FIG. 5 is an exemplary message containing a common data message identifier and associated second data field, according to one embodiment.

Description of the Preferred Embodiment

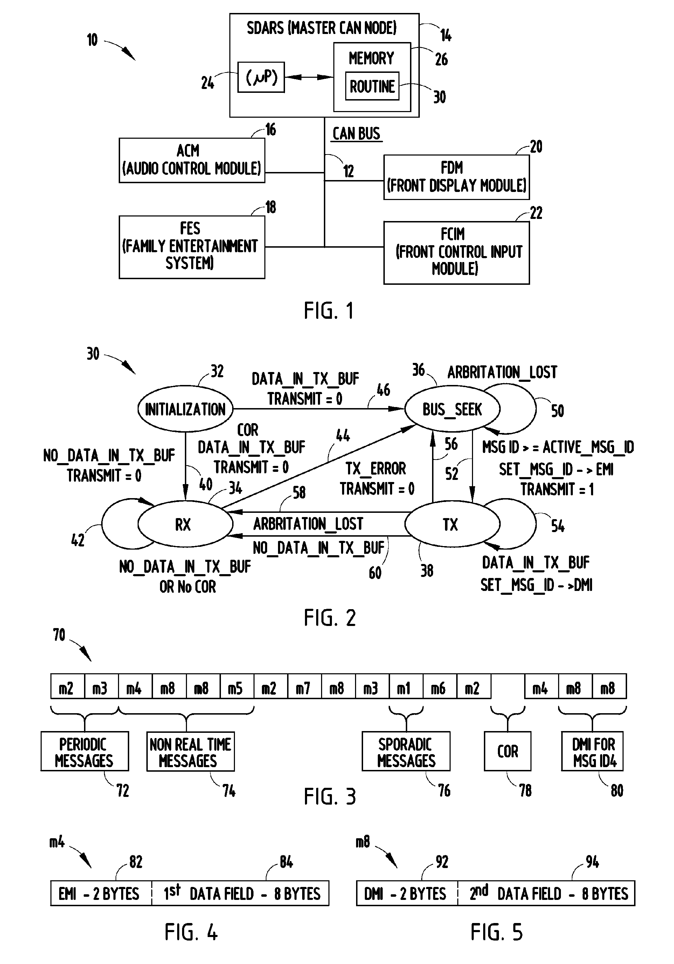

Referring now to FIG. 1, a communication network 10 is illustrated as a controller area network (CAN) communication network or system, according to one embodiment. The network 10 generally includes a CAN bus 12 configured as a serial bus line for providing the transmission medium and connected to and in communication with a plurality of communication nodes. The communication nodes are shown according to an exemplary embodiment coupled in communication with control devices, showing as a satellite digital audio radio system (SDARS) 14, an audio control module (ACM) 16, a family entertainment system (FES) 18, a front display module (FDM) 20, and a front control input module (FCIM) 22. It should be appreciated that nodes are shown in one embodiment as coupled to control devices 14-22 for use in a vehicle to control various functions, all of which may communicate data messages between or amongst the networked devices 14-22 by way of the CAN bus 12. The following description may refer to the nodes and devices 14-22 interchangeably.

In the embodiment shown, the SDARS 14 may be coupled to a master CAN node. It should be appreciated that a master node is not required, since the devices 14-22 at each node are aware of the message priorities. The master CAN node may control the transmission and arbitration of messages requested to be transmitted from one node to another node on the CAN bus 12. The SDARS control device 14 is shown including a microprocessor 24, memory 26, and one or more routines 30 stored in memory 26 and executed by microprocessor 24. It should be appreciated that each of the other devices 16-22 may likewise include a microprocessor and memory programmed with one or more routines 30.

Each of the control devices 14-22 at the nodes may prepare messages to be transmitted on the CAN bus 12 for receipt by one or more of the other devices at the other nodes in communication with the CAN bus 12. A device at one node that is requesting one or more messages be transmit prepares the message(s) including the data to be sent and message identifiers. The requested message(s) to be sent is transmitted on CAN bus 12 when it has transmit access to the bus 12. In order to get transmit access to the bus 12, the message may have to win arbitration if other messages are attempting to be transmit at the same time, which may result in the higher priority messages winning arbitration, although lower priority messages may be transmit in a shared fashion according to the present invention. In doing so, the lower priority messages can access the bus 12 when the higher priority event transmits its second set of data of the same event. Other devices at other nodes in communication with the CAN bus 12 monitor the bus 12 and, if the message identifier indicates a particular device (or node) is the intended recipient of the message, the message is received by the corresponding device (node). It should be appreciated that in order for a device (node) to receive the transmit message, the receiving device (node) has an identifier field that if matched to the identifier of the transmit message, is the appropriate recipient of the message.

The control devices 14-22 communicate via the CAN bus 12 using a shared message communication protocol according to the present invention. The communication protocol is configured to transmit non-real time messages with an identifier having either an event message identifier (EMI) or a data message identifier (DMI) accompanying the data to be transmit, and is further configured to broadcast real time messages that are generally prescheduled on the basis of a rate monotonic scheduling routine, according to one embodiment. Thus, the communication protocol may be referred to as a fixed priority fair sharing protocol.

In preparing the message(s) to be transmitted, the non-real time events are allotted with two different message identifiers, namely the event message identifier (EMI) and the data message identifier (DMI). Any transmit ready node in the network must start transmitting with the EMI at its first set of event data. The EMI is the unique message allocated for that event. If the data associated with the event is greater than a predetermined quantity, such as eight bytes (more than an allotted message length), subsequent transmission of a second message occurs with the DMI as the identifier. The DMI is generally allocated the highest possible message identification allocated for the non-real time group of events, according to one embodiment. By transmitting second data relating to the event with the DMI, the transmitting node allows other nodes in the network 10 to interrupt freely. Further, the node which is actually receptive for a particular EMI recognizes the set of second data transmitted with the DMI as part of the same event associated with the first data when transmitted in succession. Accordingly, the second data associated with the DMI in the second message is continuously processed when following the respective EMI as part of the first data of the first message. Since the DMI has the highest possible identification for the non-real time data on the network, it is the lowest priority identifier. This allows the real time and lower priority non-real time nodes to have their chance to communicate messages in the network.

Since few nodes may be quite active, while others may wake up randomly to interrupt the communication in a typical network, the introduction of the two identifiers (EMI and DMI) enhances the communication of the non-real time data. Because of the use of DMI, the ultra active nodes need not wait until the next run with no node being active for a certain amount of time in the same run. When a node in the non-real time group transmits, it sets a local flag TRANSMIT to 1. This indicates that the transmitting node has transmitted at least once in the current run. If a node is having multiple separate events, then each event will have a TRANSMIT flag of its own.

In CAN message flow, each frame transmission is typically followed by a period of time called intermission (IMS), which may consist of three recessive bits. In the present protocol, the same method is persistent to detect completion of run (COR), by having an additional three recessive bits. This eases the implementation for detecting COR. Thus, a total of six recessive bits mark the COR and each non-real time node can start transmitting a new frame, at the detection of COR, according to one embodiment.

It should be appreciated that real time events are typically allotted higher priority message identifiers. This is to accommodate the time critical node for transmitting its data without being subdued. The communication protocol of the present invention allows even the real time periodic, sporadic and non-real time events to coexist and to share communication of messages on the CAN bus 12.

Since there is no master node required for assigning and tracking the priorities, a rate monotonic algorithm may be employed when assigning priorities for real time messages, according to one embodiment. The rate monotonic scheduling algorithm is a well-known priority assignment routine employed in real time applications, is readily recognizable by one of ordinary skill in the art, and is easy to implement. According to one embodiment, this may be implemented by assigning each event a fixed priority level inversely proportional to its period. In the case of the sporadic or aperiodic task, like initialization or failure recovery routines, the priority is typically assigned a higher stake. As a result, periodic tasks may be displaced by the sporadic or aperiodic task. It should be appreciated that there may be flexibility on assigning the priority as higher or lower compared to certain periodic events which have hard deadlines. Since there may be no master or server node which assigns and maintains such priorities, each node should be well aware of their message priorities because of the rate monotonic routine and hard deadlines of certain events.

Accordingly, the fixed priority fair sharing protocol preschedules real time messages on the basis of the rate monotonic scheduling routine and allows for the transmission of non-real time messages based on sort of a round-robin approach. Each non-real time event is allotted the two messages, the unique event message identifier (EMI) and the common data message identifier (DMI). Any transmit ready node in the network must start transmitting with its EMI at its first set of event data. The EMI is the message identifier allocated for that event. If data associated with the event is greater than the predetermined quantity (e.g., eight bytes), subsequent transmission of messages for the event happens with the DMI. It should be appreciated that the DMI is a common identification for the group. By transmitting data with the DMI, the node is allowing other nodes in the network to interrupt the transmission. The node that is receptive for a particular EMI recognizes the set of data transmitted with the DMI as part of the same event when transmitted in succession, and hence, continues processing the data of the DMI when followed by the respective EMI as part of the first set of the data of the message.

The state diagram shown in FIG. 2 depicts a state diagram with steps pursuant to a routine 30 for communicating messages on the CAN bus 12 in network 10. Each node is configured with such a routine 30. From the initialization state 32, the nodes enter either BUS_SEEK state 36 if transmit access is requested or receive (RX) state 34 if no transmit access is requested. The transmit access request may be determined based mainly on the transmit ready data in the transmit memory buffer of each node. If there is no data in the transmit buffer, the TRANSMIT flag is initialized to zero and routine 30 proceeds to the RX state 34 by way of step 40. Otherwise, if there is data in the transmit buffer and the TRANSMIT flag is equal to zero, routine 30 proceeds to the BUS_SEEK state 36 by way of step 46 to seek transmit access to the bus.

In the BUS_SEEK state 36, routine 30 will stay in the same state if arbitration is lost in step 50. If the node wins arbitration, routine 30 gains transmit access to the bus and proceeds in step 52 to the transmit state 38. If the message identifier is greater than or equal to the active message identifier, routine 30 will set the message identifier for the EMI. In the transmit state 38, routine 30 will transmit the EMI and the corresponding first data in the transmit buffer. If there is additional data related to the same event, routine 30 will set a message identifier for the DMI in step 54. Once a node transmits, it sets the TRANSMIT flag to TRUE (1). The next transmission of any additional for the same event data happens with DMI by transmitting DMI with the second data.

If there is a transmit error, the TRANSMIT flag is set equal to zero and routine 30 returns to the BUS_SEEK state 36 via step 56. If any node losses the bus via arbitration in step 58 or when there is no transmit data available in the TX buffer per step 60, that node enters the RX state 34. Routine 30 will stay in the receive state 34 repeating itself via step 42 as long as there is no data in the buffer or no COR. It stays until there is a COR and data ready for transmission. On detecting the COR, the TRANSMIT flag will be set to FALSE (0) and the node will move to BUS_SEEK state 36 in step 44 and the transmit buffer should have some data. The cycle repeats accordingly, depending on the data availability or non-availability.

In FIG. 3, one example of an illustrative message frame 70 is provided. This example considers a CAN network with seven nodes. Each node has one message ID allotted for an event message transmission. It is assumed that each node has only one event. Among these nodes, there is a sporadic node (nodel) having message m1, two real time nodes (node2 and node3) having respective messages m2 and m3 and four non-real time nodes (node4-node7) having respective messages m4-m7. The message IDs are allocated as per the node numbering m1-m8. The DMI for the non-real time nodes is identified as m8. In this example, the message frame includes periodic messages 72, non-real time messages 74, sporadic messages 76, COR 78 and the DMI for message identification 80. It should be appreciated that the message frames may include various types of data in differing sizes and communicated in a different order, according to other examples.

The node2 message m2 has a period of six message length time (once in six message length time), while node3 message m3 has a period of eight message length time. During non-real time node transmission, if other nodes are not ready, the active non-real time node keeps transmitting as long as it has transmit ready data with DMI. Further, when there is an occurrence of same event and if the TRANSMIT flag is set to TRUE, the non-real time node does not transmit unless there is a detection of COR. This way the periodic node2, node3 and sporadic node1 gets their due share of the network without missing their deadline(s). Because if the highly active non-real time node keeps transmitting for each new event, the chances of real time messages (other than the highest priority message) meeting their deadlines will decrease. Further, this allows the bandwidth available for non-real time nodes to be shared evenly among them.

Examples of the first and second transmit messages are illustrated in FIGS. 4 and 5, respectively. Referring to FIG. 4, the first transmit message m4 is illustrated having the EMI 82 followed by the first data field 84. In this example, the EMI data field 82 has a predefined length of two bytes for standard ID messages, and four bytes in the case of extended ID messages, while the first data field 84 has a predefined length of eight bytes.

Referring to FIG. 5, the second transmit message m8 has a DMI field 92 followed by the second data field 94. In this example, the DMI field 92 has a message length of two bytes for standard ID messages, and four bytes in the case of extended ID messages, while the second data field 94 has a message length of eight bytes. It should be appreciated that other length messages m4 and m8 may be employed, according to other embodiments.

One example of the schedulability analysis, response time and message timings involved in this protocol is described as follows. The basic schedulability conditions for RM may be derived for a set $\Gamma$ of n periodic tasks under the assumptions that all tasks start simultaneously at time t = 0 (that is, $\Phi i = 0$ for all i = 1, ..., n), relative deadlines are equal to periods (i.e., $d_i = T_i$) and tasks are independent (i.e., they do not have resource constraints, nor precedence relations). Under such assumptions, a set of n periodic tasks are schedulable by the RM algorithm if:

$$\sum_{i=1}^{n} U_i \le n\left(2^{1/n} - 1\right) \qquad \text{equation [1a]}$$

The schedulability bound of RM is a function of the number of tasks, and it decreases with n.

$$lim\ n\left(2^{1/n} - 1\right) = ln\ 2 \approx 0.69 \qquad \text{equation [1b]}$$
$$n \to \infty$$

meaning that any task set can be scheduled by RM if $U \le 0.69$, but not all task sets can be scheduled if $0.69 < U \le 1$. Thus, the equation (1b) serves as feasibility test on the CAN systems that can incorporate this protocol according to this example.

As far as message transfer time T is considered, there may be three fragments in CAN message time -- the queuing time $T_q$, the access time $T_a$, and the frame time $T_f$. The queuing time $T_q$ is the time which elapses between the transmission requests issued by application program and the submission of the related frame to the MAC sublayer of the originating node. The access time $T_a$ is the time taken by the MAC mechanism to acquire the ownership of the shared transmission medium so that the frame can be actually sent. Finally, the frame time $T_f$ is the time effectively taken by the node to transmit the sequence of bits serially on the bus. The frame time $T_f$ transmission depends on the message format and bit rate.

In this example, the CAN message format contains forty-seven (47) bits of protocol control information (the identifier, CRC data, acknowledgement and synchronization bits, etc.). The data transmission uses a bit stuffing protocol which inserts a 'stuff bit' after five consecutive bits of the same value. Bit stuffing mechanisms are applied to the first ninety-eight (98) bits of the frame (it excludes the CRC delimited, ACK and EOF fields), considering an eight byte data field. In the worst case, bit stuffing increases the frame by 198/5 = 19 bits (23 bits in extended frames) which means an overhead of sixty-three (63) bits (eighty-seven (87) bits in extended frames), that is approximately fifty percent of the frame (fifty-eight percent in extended frames). Since the number of inserted stuff bits depends on the bit pattern of a message, a given message type can vary in size, e.g., a CAN message with eight bytes of data (and forty-seven (47) control bits) is transmitted with between zero and nineteen stuff bits.

The above discussion gives a bitwise description of CAN message. But also important in any network analysis is the message transfer time. The longest time taken to transmit a message can be calculated as shown below in equation 2. The CAN message has a forty-seven bit overhead per message, and a stuff width of five bits. Only thirty-four (34) of the forty-seven (47) bits of overhead are subject to stuffing, so $C_m$, can be defined by:

$$C_m = \left[\left[\frac{34 + 8\,s_m}{5}\right] + 47 + 8\,s_m\right]\tau_{bjt} \qquad \text{equation [2]}$$

where $s_m$, is the number of data bytes in the message m. $\tau_{bjt}$ is the time taken to transmit a bit on the bus.

In some applications, the CAN network may be subjected to high load condition. Let us evaluate the worst case response time for a non-real time node in this protocol. Nodes with real time events are identified as r, sporadic events as s and non-real time events as n.

At any point of the time if node $n_k$ is ready, it will start contending for the bus.

i. If any real time event r is also ready, node $n_k$ will be denied the bus access.
ii. If in the next frame time if either a real time event r or a sporadic event s is ready, node $n_k$ is again delayed.
iii. So node $n_k$ might experience a minimum delay of $(a+b)C_m$ equation [3]

where a-> number of real time event r frames and
b-> number of sporadic event s frames.

Once the node $n_k$ transmits, it will set its TRANSMIT flag to true and will continue its data transmission with DMI. So the above expression (3) gives a minimum wait time for the non-real time message.

If another node $n_j$ (higher priority than $n_k$) is also ready at the same time as node $n_k$, it has to wait an additional

$C_m$ times to transmit the data. Because in that time node $n_j$ will be transmitting with EMI. Assuming that other higher priority nodes are also ready at the same time, node $n_k$ will experience a total delay of $[a+b+(k-1)]$ $C_m$. equation [4]

Without this protocol, node $n_k$ and other lower priority non-real time nodes would have to wait an infinite amount of time. Because once node $n_j$ finishes the transmission, the other sporadic event s or real time event r nodes might begin the transmission and even node $n_k$ or other higher priority non-real time nodes may interrupt again in the next cycle as well. So equation [4] gives the maximum wait time for other non-real time nodes. Thus, it fixes an upper bound on the wait time of lower priority nodes. This way the fairness policy and RM ensures no higher priority nodes hog the network and no skipping of deadline for the time bound event messages.

It should be appreciated that the CAN bus network 10 allows for fair sharing of CAN messages amongst non-real time nodes by assigning two identifiers, namely EMI and the common DMI to provide for an enhance data communication protocol. It should be appreciated that all transmit and receive nodes should be configured to transmit and receive the EMI and DMI identifiers. The nodes should also process the DMI data only when the previous EMI is intended for them. The EMI signals respective receiving nodes to process the data for the DMI that follows it, which occurs when event data are more than a designated quantity, such as eight bytes, unless interrupted by other nodes. In the event an interrupted node resumes its transmission, it should start with the EMI followed by the DMI transmission.

It will be understood by those who practice the invention and those skilled in the art, that various modifications and improvements may be made to the invention without departing from the spirit of the disclosed concept. The scope of protection afforded is to be determined by the claims and by the breadth of interpretation allowed by law.

**Claims**

1.  A method for communicating messages in a communication network (10), said method comprising the steps of:

    obtaining data to be transmitted that relates to an event;
    preparing a unique event message identifier (EMI) for the event;
    preparing a common data message identifier (DMI) for the event, wherein the common data message identifier (DMI) identifies additional data related to the event;
    preparing a first transmit message (m4) comprising the unique event message identifier (EMI) and first data relating to the event;
    preparing a second transmit message (m8) comprising the common data message identifier (DMI) and additional second data relating to the event;
    transmitting the first transmit message (m4) to a communication bus (12), wherein the first transmit message (m4) may be received by one or more receiving devices (14); and
    transmitting the second transmit message (m8) to the communication bus (12), wherein the second transmit message (m8) may be received by the one or more receiving devices (14).

2.  The method as defined in claim 1, wherein the step of preparing a unique event message identifier (EMI) comprises preparing a first identifier associated with a first set of the data related to the event, and the step of preparing a common data message identifier (DMI) comprises preparing a second identifier identifying the second data related to the event, wherein if data associated with the event is greater than a predetermined quantity, then a subsequent transmission of the second transmit message is provided with the common data message identifier associated with the second data.

3.  The method as defined in claim 1, wherein the step of transmitting the first and second transmit messages to a communication bus (12) comprises transmitting the first and second transmit messages to a controller area network (CAN) bus.

4.  The method as defined in claim 3, wherein the one or more receiving devices (14) comprise one or more control devices.

5.  The method as defined in claim 3, wherein the step of transmitting the first and second transmit messages to the CAN bus (12) comprises transmitting the first and second transmit messages to a CAN bus onboard a vehicle.

6.  The method as defined in claim 1, wherein the first and second data comprises non-real time data.

7.  The method as defined in claim 6 further comprising the steps of: obtaining real time data;

preparing a real time data message comprising the real time data;
scheduling a priority associated with the real time data message; and
transmitting the real time data message to the communication bus (12).

8. The method as defined in claim 7, wherein the real time data is assigned a higher priority than the non-real time data.

9. The method as defined in claim 8 wherein the transmit first and second messages and the transmit real time data message are received by the one or more receiving devices (14) according to an arbitration protocol.

10. The method as defined in claim 7, wherein the step of scheduling real time data comprises performing a rate monotonic routine to assign the priority for the real time data message.

11. A communication network (10) comprising:

a controller area network (CAN) communication bus (12) comprising a data transmission medium and a plurality of nodes; and
a plurality of control devices (14, 16) coupled to the plurality of nodes on the CAN bus (12), said control devices each comprising a processor (24) and
memory buffer (26) for transmitting and receiving data in communication with the CAN bus (12), wherein a processor (24) of a control device (14) obtains data to be transmitted for an event, prepares a unique event message identifier (EMI) associated with first data for the event, and prepares a common data message identifier (DMI) associated with second data for the event, and wherein the processor (24) prepares a first transmit message (m1) comprising the unique event message identifier (EMI) and first data relating to the event, prepares a second transmit message (m8) comprising the common data message identifier (DMI) and the second data related to the event, and further transmits the first and second messages (m4, m8) to the CAN bus (12), wherein the first and second messages (m4, m8) may be received by another of the control devices (16).

12. The communication network as defined in claim 11, wherein the first and second transmit messages (m4, m8) are communicated to another control device (16) in communication with the CAN bus (12), wherein said another control device (16) receives the transmitted message based on an arbitration protocol.

13. The communication network as defined in claim 12, wherein the arbitration protocol allows communication of the first and second messages (m4, m8) based on a priority.

14. The communication network as defined in claim 11, wherein the data comprises non-real time data, and wherein the unique event message identifier (EMI) identifies the first data related to the event and the common data message identifier (DMI) identifies the second data related to the event, wherein the second data is transmitted in the second message when the first data exceeds a predetermined quantity.

15. The communication network as defined in claim 14, wherein the data further comprises real time data, and wherein the real time data is transmit in a real time data message having a priority identifier.

16. The communication network as defined in claim 15, wherein the real time data message is transmit to the bus (12) according to an arbitration protocol.

17. The communication network as defined in claim 16, wherein the real time data message is scheduled pursuant to a rate monotonic routine.

18. The communication network as defined in claim 11, wherein the network (10) is employed on board a vehicle.

19. The communication network as defined in claim 11, wherein the data transmission medium comprises a serial bus line.

## FIG. 1

SDARS (MASTER CAN NODE) ~14

MEMORY ~26

ROUTINE ~30

(μP) ~24

10

CAN BUS

ACM
(AUDIO CONTROL MODULE) ~16

12

FDM
(FRONT DISPLAY MODULE) ~20

FES
(FAMILY ENTERTAINMENT
SYSTEM) ~18

FCIM
(FRONT CONTROL INPUT
MODULE) ~22

FIG. 1

## FIG. 2

30

INITIALIZATION ~32

DATA_IN_TX_BUF
TRANSMIT = 0 ~46

BUS_SEEK ~36

ARBRITATION_LOST

~50

NO_DATA_IN_TX_BUF
TRANSMIT = 0

COR
DATA_IN_TX_BUF
TRANSMIT = 0 ~44

MSG ID > = ACTIVE_MSG_ID

SET_MSG_ID - > EMI
TRANSMIT = 1

40 ~34

TX_ERROR
TRANSMIT = 0

56

52

RX

42

58

ARBRITATION_LOST

NO_DATA_IN_TX_BUF

TX ~54

NO_DATA_IN_TX_BUF
OR No COR

60

38

DATA_IN_TX_BUF
SET_MSG_ID - >DMI

FIG. 2

## FIG. 3

70

| m2 | m3 | m4 | m8 | m8 | m5 | m2 | m7 | m8 | m3 | m1 | m6 | m2 | | m4 | m8 | m8 |

PERIODIC
MESSAGES ~72

NON REAL TIME
MESSAGES ~74

SPORADIC
MESSAGES ~76

COR ~78

DMI FOR
MSG ID4 ~80

FIG. 3

## FIG. 4

m4

EMI - 2 BYTES ~82 | 1st DATA FIELD - 8 BYTES ~84

FIG. 4

## FIG. 5

m8

DMI - 2 BYTES ~92 | 2nd DATA FIELD - 8 BYTES ~94

FIG. 5

**European Patent Office**

**EUROPEAN SEARCH REPORT**

Application Number

EP 08 15 1816

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 991 806 A (MCHANN JR STANLEY E [US]) 23 November 1999 (1999-11-23) * pages 1,2,8 * * column 5, lines 8-27,57-66 * * column 6, lines 60-66 * * column 10, lines 54-62 * * column 12, lines 52-67 * * column 13, lines 45-54 * ----- | 1-19 | INV. H04L12/40 H04L12/28 G06F15/16 |
| A | US 2006/088044 A1 (HAMMERL ROBERT [DE]) 27 April 2006 (2006-04-27) * figure 1 * * page 1, paragraphs 4,9 * * page 3, paragraph 20 * * page 5, paragraph 44 * * page 6, paragraph 44 * ----- | 1-19 | |
| A | US 6 292 825 B1 (CHANG DAVID YU [US] ET AL) 18 September 2001 (2001-09-18) * figures 1,3-5 * * column 2, lines 38-61 * * column 5, lines 35-58 * * column 6, lines 22-35 * ----- | 1-19 | TECHNICAL FIELDS SEARCHED (IPC) H04L G06F |

The present search report has been drawn up for all claims

| Place of search | Date of completion of the search | Examiner |
|---|---|---|
| Munich | 9 June 2008 | Mircescu, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 15 1816

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2008

| Patent document cited in search report | | Publication date | Patent family member(s) | | Publication date |
|---|---|---|---|---|---|
| US 5991806 | A | 23-11-1999 | NONE | | |
| US 2006088044 | A1 | 27-04-2006 | DE 102004052075 | A1 | 27-04-2006 |
| | | | EP 1653363 | A1 | 03-05-2006 |
| US 6292825 | B1 | 18-09-2001 | NONE | | |

EPO FORM P0459

For more details about this annex : see Official Journal of the European Patent Office, No. 12/82